# FASCICULE DE BREVET EUROPEEN

(11) **EP 2 346 962 B1**
(45) Date de publication et mention de la délivrance du brevet: **21.02.2018**
(21) Numéro de dépôt: 09760946.5
(22) Date de dépôt: 20.10.2009
(51) Int. Cl.: C10G 3/00, C10G 47/00, C10G 49/00, C10G 65/04, C10G 65/12, C10L 1/02, C10G 49/22, C10L 1/04, C11D 7/50, C09D 7/06, A01N 27/00

(54) **PROCEDE D'OBTENTION DE BIOKEROSENE**
VERFAHREN ZUR HERSTELLUNG VON BIOKEROSIN
PROCESS FOR OBTAINING BIOKEROSENE

(30) Priorité: 24.10.2008 FR 0805911
(43) Date de publication de la demande: 27.07.2011
(73) Titulaire: Total Raffinage France, 92400 Courbevoie (FR)
(72) Inventeur: MAYEUR, Vincent, 76330 Notre Dame de Gravenchon (FR); HECQUET, Michael, 76930 Octeville sur Mer (FR); DEMOMENT, Pascale, 92200 Neuilly sur Seine (FR)
(74) Mandataire: Largeau, Béatrice
(86) Numéro de dépôt international: PCT/FR2009/051998
(87) Numéro de publication internationale: WO 2010/046590

(56) Documents cités:
- EP-A- 1 857 525
- WO-A-2007/125332
- WO-A-2008/020048
- FR-A- 2 910 017
- FR-A- 2 910 485
- JP-A- 2007 153 928

## Description

La présente invention se situe dans le domaine technique de l'hydrotraitement ou l'hydrocraquage de charges pétrolières et de charges d'origine biologique. Plus particulièrement, l'invention concerne un procédé pour obtenir un kérosène présentant une forte composante d'origine biologique (ou renouvelable).

Actuellement, les pouvoirs publics souhaitent augmenter la proportion de composants d'origine biologique dans les carburants.

Par exemple, la directive européenne 2003/30/CE vise notamment à promouvoir l'utilisation de biocarburants dans les transports. Dans les transports, la communauté européenne a adopté un objectif de part de biocarburants de 5,75% du PCI (Pouvoir Calorifique Inférieur) des carburants en 2010, C'est-à-dire que la quantité de biocarburant présente dans le mélange doit procurer 5,75% du PCI du mélange.

D'autre part, le gouvernement français a instauré une taxe : la TGAP (Taxe Générale des Activités Polluantes), qui concerne les carburants mis à la consommation sur le territoire français. Les carburants soumis à cette taxe sont le « SP95 », le « SP98 » et le « Gazole Moteur ». L'objectif de cette taxe est d'inciter l'incorporation de Biocarburant en augmentant progressivement le %PCI (Pouvoir Calorifique Inférieur) de 1,75% en 2006 à 7,00% en 2010,

Ces incitations concernent plus particulièrement le domaine des carburants automobiles, cependant il est prévu qu'à terme le secteur aérien soit également concerné. En particulier, il est prévu que les émissions de gaz à effet de serre dans le cas du transport aérien soient soumises à réglementation.

Afin d'obtenir des « biocarburants », des procédés de raffinage de la biomasse ont été élaborés. Ainsi, les documents US 4 992 605, US 5 705 722 et SE 520 633 décrivent des procédés d'hydrotraitement des triglycérides formant les huiles végétales. Ces procédés d'hydrotraitement d'huiles végétales pures nécessitent le plus souvent la construction d'unités spécifiques.

D'autre part, des procédés d'hydrotraitement d'une charge d'origine pétrolière de type gazole mélangé à une charge d'huiles végétales et/ou de graisses animales sont également connus, par exemple par le document EP 1 693 432.

Les procédés décrits conduisent généralement à des carburants destinés au transport automobile, comme du gazole.

Par ailleurs, le document EP 1 857 525 décrit un procédé d'hydrotraitement d'une composition consistant en du kérosène et des huiles végétales conduisant à un kérosène comprenant une composante d'origine biologique. Cependant, les kérosènes obtenus par la technique décrite dans ce document ne peuvent permettre à la fois un taux d'incorporation important de composante biologique et un kérosène présentant des propriétés optimum, en particulier, respectant la spécification internationale AFQRJOS (Aviation Fuel Quality Requirements for Jointly Operated Systems). Le document FR2910017 décrit un procédé pour produire du gazole comprenant l'hydrotraitement catalytique d'une charge d'origine pétrolière de type gazole et d'une charge d'origine biologique à base d'huiles végétales et/ou graisses animales dans une unité d'hydrotraitement catalytique en lit fixe, ledit procédé étant caractérisé en ce que la charge d'origine pétrolière est introduite dans ledit réacteur en amont de la charge d'origine biologique. Les procédés décrits dans l'art antérieur peuvent présenter un coût important, être insuffisamment performants, par exemple en terme de rendement et/ou de réduction des émissions de gaz à effet de serre.

En général, les procédés de l'art antérieur envisagent des installations dédiées, ce qui implique une faible flexibilité de l'utilisation de ces installations. En effet, les procédés d'hydrotraitement et d'hydrocraquage d'huiles végétales pures nécessitent la construction d'unités spécifiques qui sont coûteuses et pour lesquelles le retour sur investissement est difficile à atteindre.

Tout particulièrement, les procédés de l'art antérieur présentent un problème lié à la désactivation des catalyseurs, en particulier par des produits obtenus à partir de la charge d'origine biologique, comme le monoxyde de carbone.

La présente invention a donc pour but de résoudre en tout ou partie les inconvénients évoqués ci-dessus. En particulier, la présente invention vise à permettre la production de kérosène comprenant une composante biologique et de meilleure qualité, en utilisant des installations d'hydrotraitement ou d'hydrocraquage classiques. En outre, la mise en oeuvre de la présente invention permet d'obtenir une coupe gazole comprenant également une partie d'origine biologique.

Selon un premier aspect, l'invention a pour objet un procédé comprenant les étapes consistant à :
- effectuer un hydrotraitement ou un hydrocraquage opéré sous une pression de 20 à 120 bars et à une température comprise entre 250 et 500°C, préférentiellement entre 350 et 400°C, sur une charge hydrocarbonée comprenant ou consistant en :
   - une charge d'origine pétrolière.
   - une charge d'origine biologique comprenant ou constituée par des huiles végétales et/ou des graisses animales dont au moins 5 % en poids des acides gras formant les triglycérides, ont une longueur de chaîne inférieure ou égale à 14 atomes de carbone (encore appelés C14-) par rapport au poids total des triglycérides, préférentiellement au moins 20 % en poids, voire au moins 50 % en poids.
- effectuer un fractionnement de manière à récupérer une fraction kérosène, ladite fraction ayant préférentiellement un point d'ébullition inférieur à 300°C, et encore plus préférentiellement un point d'ébullition inférieur à 240°C, dans lequel la charge d'origine pétrolière est injectée dans une première zone catalytique de l'unité d'hydrotraitement ou d'hydrocraquage et la charge d'origine biologique est injectée dans une deuxième zone catalytique de l'unité d'hydrotraitement ou d'hydrocraquage, située en aval de la première zone catalytique.
Le procédé selon l'invention permet ainsi d'obtenir une coupe kérosène dont une partie est d'origine biologique.

La méthode classique d'incorporation d'ester méthylique d'huile végétale dans la coupe kérosène, ne permet d'incorporer qu'une faible teneur de composante biologique tout en respectant les spécifications du Jet A1 (environ 3 % au plus dans le cas de l'ester méthylique d'huile de coprah). Outre le fait que le carburéacteur obtenu présente une faible teneur en composante biologique, il a un plus faible PCI (pouvoir calorifique inférieur) en comparaison à un carburéacteur d'origine pétrolière, et comporte des composés oxygénés qui ne sont généralement pas souhaités dans les carburéacteurs à cause, entre autres, des difficultés et des problèmes qu'ils impliquent pour le stockage et la stabilité (risque de développement de bactéries).

La demanderesse a constaté, de façon surprenante, que dans le cas de l'invention, le taux d'incorporation d'une composante d'origine biologique, est beaucoup plus élevé, tout en respectant les spécifications du Jet A1 (environ 15 % dans le cas d'un mélange d'une coupe kérosène d'origine pétrolière et d'une coupe kérosène obtenue par la mise en oeuvre du procédé selon l'invention). De plus, le carburéacteur ainsi obtenu présente un meilleur PCI en comparaison à un carburéacteur d'origine pétrolière, et ne comporte pas ou très peu de composés oxygénés

De plus, même avec un taux faible d'incorporation d'huile végétale dans le procédé d'hydrotraitement ou d'hydrocraquage selon l'invention, une coupe kérosène à forte teneur en composante biologique est obtenue. Ceci peut également permettre une grande liberté dans l'optimisation du mélange pour le pool kérosène.

Du CO et du CO₂ sont formées lors de l'hydrotraitement ou l'hydrocraquage de coupes d'origine biologique du type huiles végétales et/ou graisses animales. En effet, la décarboxylation/décarbonylation des molécules d'acide gras contenues dans les triglycérides, provoque l'émission de gaz CO, CO₂ diminuant la pression partielle d'hydrogène. De plus, outre les problèmes de sécurité sur les personnes, le CO est un inhibiteur réversible de l'activité désulfurante du catalyseur d'hydrotraitement et d'hydrocraquage.

Or, la mise en oeuvre du procédé selon l'invention conduit à une formation des gaz CO et CO₂ faible par rapport à la quantité formée par le traitement de coupes d'origine biologique pure. Ainsi, le gaz de recycle n'en contient qu'une faible quantité, ce qui peut permettre aux catalyseurs d'hydrotraitement ou d'hydrocraquage de conserver une bonne activité catalytique.

Enfin, la Demanderesse a constaté de manière surprenante que l'hydrotraitement ou l'hydrocraquage de ce mélange peut être effectué dans des unités d'hydrotraitement ou d'hydrocraquage classiques, qui peuvent donc, sans réglages particuliers ou avec des réglages très rapides, traiter indifféremment des charges pétrolières ou des charges comprenant des huiles végétales et/ou des graisses animales, telles que définies dans cette description.

La charge d'origine pétrolière peut tout particulièrement être choisie parmi :
- les coupes gazole provenant de la distillation directe d'un pétrole brut,
- les coupes gazoles issues de différents procédés de conversion tels que le craquage catalytique et la viscoréduction, distillats de distillation sous vide, tel que le VGO (vacuum gas oil),
- les coupes gazoles issus de procédés de conversion, et
- les résidus de la distillation directe d'un pétrole brut, en particulier la distillation atmosphérique.

En particulier, lorsque la charge d'origine pétrolière est un résidu atmosphérique (RAT), le réacteur destiné à l'hydrocraquage peut comprendre un ou deux premiers lits catalytiques destinées à l'hydrodémétallation (HDM) de la charge, appelés communément « lits de garde ». Il est connu que l'activité du catalyseur d'hydrodémétallation est améliorée en présence d'eau. C'est la raison pour laquelle il est parfois envisagé d'injecter de l'eau dans le réacteur au niveau du lit catalytique d'hydrodémétallation. Or, en mettant en oeuvre ce mode particulier de l'invention, il n'est plus nécessaire d'injecter de l'eau, car de l'eau est produite du fait de l'hydrodéoxygénation des huiles végétales et/ou graisses animales.

La charge d'origine biologique peut comprendre au moins une huile végétale choisie parmi l'huile de palmiste, l'huile de coprah (aussi appelée l'huile de coco ou l'huile de noix de coco), l'huile de babassu, huiles issues d'algues, ou un mélange de deux ou plusieurs de ces huiles.

En plus d'une huile telle que décrite ci-dessus, la charge d'origine biologique peut comprendre au moins une huile choisie parmi l'huile de palme, l'huile de soja, l'huile de colza, l'huile de tournesol, l'huile de lin, l'huile de son de riz, l'huile de maïs, l'huile d'olive, l'huile de ricin, l'huile de sésame, l'huile de pin et l'huile d'arachide.

Préférentiellement, la charge d'origine biologique peut comprendre un mélange d'huile de palmiste et d'huile de palme. Toutes deux sont issues de la même plante.

La charge hydrocarbonée peut comprendre une teneur en charge d'origine biologique du type huiles végétales et/ou graisses animales inférieure ou égale à 30 % en poids, notamment inférieure ou égale à 20 % en poids et en particulier inférieure ou égale à 10 % en poids par rapport au poids total de la charge hydrocarbonée.

Autrement dit la charge d'origine biologique peut constituer jusqu'à 30 % poids de la charge hydrocarbonée totale composée de la charge d'origine pétrolière et de la charge d'origine biologique.

La charge obtenue en sortie de réacteur subit un fractionnement. Ce fractionnement peut être effectué par ajout d'une colonne de séparation ou par soutirage latéral. L'exothermicité liée à l'hydrotraitement ou l'hydrocraquage de la charge d'origine biologique peut permettre d'améliorer le bilan thermique de l'unité d'hydrotraitement ou hydrocraquage selon l'invention. En effet, cette exothermicité peut permettre par exemple, au niveau des échangeurs de chaleur, de mieux chauffer la charge en entrée du réacteur. Le four, qui a moins besoin de chauffer, consomme donc moins de combustible et conduit à une moindre production de gaz à effet de serre. La charge d'origine pétrolière est injectée dans une première zone catalytique de l'unité d'hydrotraitement ou d'hydrocraquage et la charge d'origine biologique est injectée dans une deuxième zone catalytique de l'unité d'hydrotraitement ou d'hydrocraquage, située en aval de la première zone catalytique. C'est le cas, par exemple, lorsque l'incorporation d'huiles végétales et/ou de graisses animales se fait « en quench ».

L'hydrodéoxygénation de la charge d'origine biologique a lieu en aval de l'hydrodésulfuration de la coupe pétrolière de sorte que cette dernière peut être menée sans l'effet inhibiteur du CO et des autres gaz formés lors de la réaction d'hydrodéoxygénation des triglycérides de la charge d'origine biologique, et de sorte que la pression partielle d'hydrogène ne sera pas abaissée par la réaction d'hydrotraitement de la charge d'origine biologique, ce qui permet de maintenir une activité catalytique élevée en hydrodésulfuration.

L'introduction en aval de la charge d'origine biologique peut permettre également de réaliser l'hydrotraitement ou l'hydrocraquage dans des conditions particulièrement favorables (pression partielle d'hydrogène plus élevée...), et de diminuer ainsi l'impact de l'incorporation d'huiles végétales et/ou de graisses animales sur les réactions d'hydrotraitement.

L'incorporation d'une charge d'origine biologique à la charge d'origine pétrolière peut conduire à la formation de nouveaux produits (CO, CO₂ H₂O) qui vont se retrouver dans ces gaz recyclés, en sortie de la zone de séparation. Il peut alors être avantageux de prévoir des condenseurs afin d'éliminer l'eau et/ou une unité de traitement et de séparation du monoxyde de carbone produit.

Une telle unité de traitement et de séparation du monoxyde de carbone produit peut être une unité de conversion du monoxyde de carbone en dioxyde de carbone (appelées « CO shift » par les spécialistes) selon la réaction :

CO + H₂O → CO₂ + H₂

Le dioxyde de carbone résultant peut alors être facilement éliminé, par exemple, par un lavage aux amines, tandis que l'on peut récupérer l'hydrogène produit pour le réinjecter dans le réacteur ou le mélanger au gaz riche en hydrogène mélangé à la charge.

Une telle unité de conversion du CO peut être placée en sortie du gaz séparé par la zone de séparation.

Il est également possible d'utiliser une unité de traitement PSA (abréviation de Pressure Swing Adsorption - Adsorption par Variations de Pression). Cette technologie est connue en elle même. Les adsorbants sont sélectionnés en fonction de la nature des impuretés à éliminer des courants porteurs d'hydrogène, et qui sont dans notre cas le monoxyde de carbone CO et éventuellement le méthane CH₄, l'éthane C₂H₆, le propane C₃H₈ ...

Préférentiellement, les gaz ainsi séparés sont utilisés dans un vaporéformeur, tel qu'un vaporéformeur de méthane (« SMR » : Steam Methane Reformer). Le CO et les autres produits de la désoxygénation de la charge d'origine biologique, sont ainsi valorisés comme gaz de synthèse pour la production d'un gaz hydrogéné d'origine biologique. En utilisant cette configuration, le CO est donc valorisé et on n'est donc pas tenu, afin d'éviter son effet inhibiteur, de diminuer sa concentration en faveur de la concentration en CO₂ qui peut être plus facilement éliminé.

Selon un mode de réalisation particulier, on effectue une étape d'isomérisation de la fraction kérosène obtenue par la mise en oeuvre du procédé de l'invention.

La fraction kérosène obtenue par le procédé selon l'invention peut être utilisée pour la formulation d'un carburéacteur de telle sorte que celui-ci respecte les spécifications du JetA1.

La coupe kérosène isomérisée peut être incorporée à un taux encore plus élevé (par rapport à une coupe kérosène selon l'invention, non isomérisée) dans une coupe kérosène d'origine pétrolière, tout en respectant les spécifications du JetA1.

Par exemple, dans le cas où on peut atteindre 15% de biokérosène sans isomérisation, il est possible d'aller au-delà de 15% avec une étape d'isomérisation supplémentaire.

La fraction kérosène obtenue par le procédé selon l'invention peut également être utilisée en tant que charge de procédés pétrochimiques, tels que le vapocraquage. En effet, cette charge riche en normales paraffines, permet une amélioration sensible des performances en vapocraquage par rapport à une charge conventionnelle, à iso débit de charge, en particulier :
- Une augmentation significative des rendements oléfiniques et en particulier en éthylène, par exemple 15-20 % de rendement massique supplémentaire,
- Une production accrue en hydrogène,
- Une diminution de la production de gaz légers (fuel gas),
- Une diminution de la production de coke et de fractions lourdes (indice d'aromaticité de la charge faible)...

De plus, les effluents du vapocraquage étant en partie d'origine biologique, cela conduira à des polymères en partie d'origine biologique.

La fraction kérosène obtenue par le procédé selon l'invention peut également être utilisée pour la formulation de produits de spécialités, tels que solvants, diluants d'encres et de peintures, dégraissants et produits phytosanitaires.

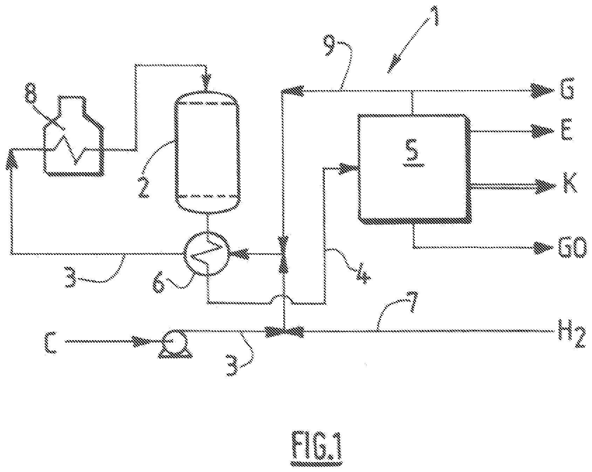

La figure 1, non conforme à l' invention, représente un schéma simplifié d'une unité 1 d'hydrotraitement de type gazole.

Cette unité 1 comprend un réacteur 2 dans lequel est introduite la charge à traiter au moyen d'une ligne 3. Ce réacteur contient un ou plusieurs lits de catalyseurs d'hydrotraitement.

La charge (C), dans la présente invention, est un mélange d'une charge gazole d'origine pétrolière et d'une charge d'origine biologique du type huiles végétales et/ou graisses animales.

Une ligne 4 récupère l'effluent en sortie du réacteur 2 et le conduit à une section de séparation 5.

Un échangeur de chaleur 6 est placé en aval du réacteur sur la ligne 4 afin de chauffer la charge circulant dans la ligne 3, en amont du réacteur.

En amont de cet échangeur de chaleur 6, une ligne 7, raccordée sur la ligne 3, apporte à la charge à traiter un gaz riche en H₂.

En aval de l'échangeur de chaleur 6, et en amont du réacteur 2, la charge mélangée au gaz riche en H₂ circulant dans la ligne 3 est chauffée par un four 8.

Ainsi, la charge est mélangée au gaz riche en hydrogène, puis portée à la température de réaction par l'échangeur de chaleur 6 et le four 8 avant son entrée dans le réacteur 2. Elle passe ensuite dans le réacteur 2.

A la sortie du réacteur, le mélange obtenu est refroidi, puis séparé dans la section de séparation 5, ce qui permet d'obtenir :
- un gaz acide riche en H₂S, dont une partie est réinjectée dans le gaz riche en H₂ mélangé à la charge, au moyen d'une ligne 9,
- une coupe essence (E),
- une coupe kérosène (K), et
- une coupe gazole (GO).

### EXEMPLES

### - Non conforme à l'invention Exemples 1 et 2

Deux charges ont été traitées dans une unité pilote d'hydrotraitement. La première est constituée de gazole et a été traitée sans incorporation d'huiles végétales (exemple 1). La deuxième est constituée d'un mélange gazole et de 8% d'huile de coprah (exemple 2).

Les conditions d'expérimentation sont détaillées ci-après.

### Installation

Le procédé selon l'invention a été testé sur une unité pilote en lit fixe isotherme contenant du catalyseur de formulation du type NiMo, avec un écoulement à co-courant des flux de liquides et de gaz.

Le profil de température des réacteurs est constant, les réacteurs fonctionnant en mode isotherme.

L'unité pilote ne possède pas de recyclage des gaz et la charge est traitée en une seule passe, c'est-à-dire en « Once through » selon les spécialistes.

La pureté de l'hydrogène injecté dans le pilote est de 100%.

### Charge étudiée

Les caractéristiques de la charge gazole et de l'huile de coprah sont reportées dans les tableaux 1 et 2 respectivement.

L'huile de coprah présente la particularité de contenir une proportion élevée de chaînes de 12 atomes de carbone : les chaînes en C₁₂ représentent environ 45 % en poids des acides contenus dans l'huile, les chaînes en C₁₄ représentent 18 % en poids. Par conséquent, l'hydrogénation de triglycérides de l'huile de coprah conduit à la formation de chaînes paraffiniques en C₁₂, voire en C₁₁ en cas de décarbonylation ou de décarboxylation, et en plus faible proportion, en C₁₄ et/ou C₁₅.

**Tableau 1 : caractéristiques de la charge gazole**

| | |
|---|---|
| Densité à 15°C | 0,8433 |
| Teneur en soufre (ppm) | 1260 |
| Teneur en azote basique (ppm) | 20 |
| Point de trouble (°C) | -4 |
| Point d'écoulement (°C) | - 6 |
| Indice de Cétane mesuré | 56 |
| Température de distillation du gazole (°C, ASTM 86) | |
| 5% | 245,1 |
| 20% | 260,3 |
| 50% | 284,9 |
| 80% | 314,3 |
| 95% | 347,6 |
| Indice de brome (mg Br/ 100g) | 621 |
| Teneur en polyaromatiques (% en poids) | 8,2 |
| Teneur totale en aromatiques (% en poids) | 22,2 |

**Tableau 2 : caractéristiques de l'huile de coprah**

| | |
|---|---|
| Densité à 15°C | 0,9100 |
| Composition en acide (% en poids) | |
| Acide Caprylique 8 :0 | 3,5 |
| Acide Caprique 10:0 | 6,3 |
| Acide laurique 12 : 0 | 45,4 |
| Acide myristique 14 : 0 | 19,3 |
| Acide palmitique 16 : 0 | 10,4 |
| Acide stéarique 18 : 0 | 1,8 |
| Acide oléique 18 : 1 | 9,7 |
| Acide linoléique 18 : 2 | 1,8 |
| Teneur en éléments (ppm) | |
| Phosphore | < 4 |
| Calcium | < 1 |
| Cuivre | < 1 |
| Fer | < 1 |
| Magnésium | < 1 |
| Sodium | < 0,3 |
| Chlore | < 20 |
| Teneur organique | |
| Carbone (% en poids) | 75 |
| Hydrogène (% en poids) | 13 |
| Oxygène (% en poids) | 12 |

### Conditions opératoires

Les conditions opératoires sont reportées dans le tableau 3.

**Tableau 3 : Conditions opératoires**

| | Réacteur |
|---|---|
| Pression totale (bar) | 40 |
| H₂/HC (N1/1) | 160 |
| VVH (h⁻¹) | 1,0 |
| Température (°C) | 345 |

### Qualité des produits

Le tableau 4 regroupe les rendements poids par rapport à la charge de ces coupes.

**Tableau 4 : Rendements des effluents des exemples 1 et 2**

| **Exemple** | **1** | **2** |
|---|---|---|
| **Rendements en % poids** | | |
| H₂S | 0,13 | 0,12 |
| H₂O | - | 1,20 |
| CO | - | 0,06 |
| CO₂ | - | 0,19 |
| C₁ | 0,01 | 0,24 |
| C₂ | 0,01 | 0,02 |
| C₃ | 0,02 | 0,55 |
| C₄ | 0,02 | 0,03 |
| Essence légère C₅ - 65°C | 0,49 | 0,53 |
| Essence lourde 65-145°C | 2,2 | 2,4 |
| **Coupe kérosène 145-240 °C** | **9,3** | **13,0** |
| Coupe gazole 240-375 °C | 87,8 | 81,7 |
| Coupe 375°C + | - | - |

La quantité de triglycérides mesurée en sortie du réacteur d'hydrotraitement, dans l'exemple 2 est inférieure à la limite détectable (<0,05 % en poids), confirmant la décomposition des triglycérides dans le réacteur.

Dans l'art antérieur, lorsque le fractionnement de la coupe kérosène n'est pas prévu, on récupère en tant qu'effluent gazole toute la coupe 180-375°C de l'exemple 1 (soit environ 95 %) qui part vers le pool gazole.

Le tableau 5 regroupe les caractéristiques de la coupe kérosène obtenue dans les exemples 1 et 2.

**Tableau 5 : Qualité de la coupe kérosène (145-240 °C) dans l'effluent de l'exemple 1 (fraction notée A) et de l'exemple 2 (fraction notée B)**

| | A | B |
|---|---|---|
| Densité à 15°C | 0,7974 | 0,7850 |
| Point éclair (°C) | 48,0 | 51,0 |
| Point de décongélation automatique (°C, ASTM D7153) | -51,2 | -35,2 |
| Lubrifiance BOCLE (mm, ASTM D5001) | | 0,58 |
| Point de fumée (mm, ASTM D 1322) | 24,5 | 27,5 |
| **Teneur composant biologique dans le kérosène (% poids)** | **-** | **34** |
| Température de distillation (°C, ASTM D86) | | |
| 5% (% de produit distillé) | 164,0 | 176,9 |
| 10% | 167,2 | 185,2 |
| 50% | 193,3 | 201,9 |
| 80% | 224,5 | 221,3 |
| 95 % | 250,1 | 244,6 |
| Résidu (% vol) | 1,2 | 1,1 |
| Perte (% vol) | 0,8 | 0,8 |

Le tableau 6 regroupe les caractéristiques du gazole obtenu dans les deux exemples.

**Tableau 6 : Qualité de la coupe gazole (240-375 °C) dans l'effluent des exemples 1 et 2**

| | coupe gazole dans l'effluent de l'exemple **1** | coupe gazole dans l'effluent de l'exemple **2** |
|---|---|---|
| Densité à 15°C | 0,8444 | 0,8419 |
| Point de trouble (°C) | -1 | -1 |
| Soufre (ppm) | 8 | 12 |
| Indice cétane calculé | 53 | 54 |
| Teneur en composant biologique dans le gazole (% poids) | - | 3,3 |
| Température de distillation (°C, ASTM D86) | | |
| 5% (% en poids de produit distillé) | 262 | 260 |
| 20% | 274 | 276 |
| 50% | 298 | 299 |
| 80% | 328 | 327 |
| 95% | 342 | 341 |

L'effet bénéfique est, entre autres, une baisse de la densité, tout en gardant des propriétés à froid équivalentes. En effet, le point de trouble reste constant.

Quant à la teneur en soufre, elle est très légèrement supérieure du fait de l'effet d'inhibition dû à la présence du monoxyde de carbone. Néanmoins, l'homme du métier saura rectifier le taux de soufre par des réglages de la température réactionnelle.

De plus, en comparaison à d'autres biocarburants, notamment au biogazole obtenu par incorporation d'ester méthylique d'huile végétale, le biogazole est caractérisé par un meilleur PCI (pouvoir calorifique inférieur).

### Exemples 3 à 11 : formulation de carburéacteurs (ou carburants d'aviation) :

Les moteurs d'aviation à turbine (turboréacteurs, turbopropulseurs) utilisent des carburants à base de kérosène. En aviation civile, le carburant de ce type le plus répandu est le Jet A-1, défini par la spécification internationale AFQRJOS (Aviation Fuel Quality Requirements for Jointly Operated Systems) dont le point de décongélation est inférieur ou égal à -47°C.

En principe, la conformité à l'AFQRJOS portant sur le JET A-1 requière la conformité à l'intégralité des spécifications du carburéacteur Jet A-1 suivantes :
- Norme ASTM D 1655, Jet A-1
- Norme britannique DEF STAN 91-91, Jet A-1

Dans cette série d'exemples, nous allons comparer les formulations de carburéacteurs suivantes :
- kérosène fossile A (coupe kérosène de l'effluent de l'exemple 1 ci-dessus)
- mélange de kérosène fossile A et d'ester méthylique d'huile de coprah (exemples 3 à 5)
- Mélange de kérosène fossile A et de bio kérosène B selon l'invention (coupe kérosène de l'effluent de l'exemple 2 ci-dessus) (exemples 6 à 10).

**Tableau 7 : caractéristiques de l'ester méthylique de l'huile de coprah**

| | | |
|---|---|---|
| Densité à 15°C | | 0,8728 |
| Composition en acide (% en poids) | | |
| Acide Caprylique | 8 :0 | 3,5 |
| Acide Caprique | 10:0 | 6,3 |
| Acide laurique | 12 : 0 | 45,4 |
| Acide myristique | 14 : 0 | 19,3 |
| Acide palmitique | 16 : 0 | 10,4 |
| Acide stéarique | 18 : 0 | 1,9 |
| Acide oléique | 18 : 1 | 9,7 |
| Acide linoléique | 18 : 2 | 1,6 |
| Teneur en éléments (ppm) | | |
| Phosphore | | < 4 |
| Calcium | | < 1 |
| Cuivre | | < 1 |
| Fer | | < 1 |
| Magnésium | | < 1 |
| Sodium | | < 0,3 |

**Tableau 8 : Caractéristiques des carburéacteurs obtenus après incorporation d'ester méthylique d'huile de coprah (exemples 3 à 5)**

| **Exemple** | **Exigences AFQRJOS** | **A** | **3** | **4** | **5** |
|---|---|---|---|---|---|
| Coupe kérosène d'origine pétrolière (% en poids) | | 100 | 98 | 97 | 95 |
| Ester méthylique d'huile de coprah (% en poids) | | 0 | 2 | 3 | 5 |
| Densité à 15°C | | 0,7974 | 0,7990 | 0,7997 | 0,8012 |
| **Point de décongélation automatique (°C)** | **≤ -47** | **-51,2** | **-49,3** | **-46,8** | **-39,4** |
| Température de distillation (°C, ASTM D86) | | | | | |
| 5 % (% de produit distillé) | | 164,0 | 161,7 | 161,7 | 163,0 |
| 10 % | ≤ 205 | 167,2 | 167,0 | 166,5 | 167,0 |
| 50 % | | 193,3 | 193,2 | 193,5 | 195,2 |
| 80 % | | 224,5 | 224,5 | 226,2 | 228,2 |
| 95 % | | 250,1 | 250,7 | 252,7 | 258,2 |
| PF | ≤ 300 | 261,1 | 271,5 | 274,5 | 282,5 |
| | | | | | |
| Résidu (% vol) | ≤ 1,5 | 1,2 | 1,2 | 1,2 | 1,5 |
| Perte (% vol) | ≤ 1,5 | 0,8 | 0,8 | 0,9 | 0,5 |

Ce tableau montre qu'un taux d'incorporation entre 2 et 3% d'ester méthylique d'huile de coprah, permet d'obtenir un carburéacteur Jet A-1 conforme aux spécifications actuelles (AFQRJOS), en particulier pour le point de décongélation qui doit être inférieur ou égal à -47°C.

Au-delà de 3 % d'ester méthylique d'huile de coprah dans le carburéacteur, ce dernier ne respecte plus l'exigence du point de décongélation inférieur ou égal à -47°C.

De plus, ce carburéacteur contient des composés oxygénés, ce qui implique un plus faible PCI (pouvoir calorifique inférieur) en comparaison à un carburéacteur d'origine pétrolière, ainsi que des difficultés possibles pour le stockage et la stabilité (risques de développement bactérien).

**Tableau 9 : Caractéristiques des carburéacteurs obtenus après incorporation de la coupe kérosène B (obtenue dans l'exemple 2)**

| **Exemple** | **Exigences AFQRJOS** | **A** | **6** | **7** | **8** | **9** | **10** |
|---|---|---|---|---|---|---|---|
| Coupe kérosène A | | 100 | 91 | 85 | 70 | 65 | 55 |
| Coupe kérosène B | | 0 | 9 | 15 | 30 | 35 | 45 |
| **Teneur en composant bio** | | **0** | **3** | **5** | **10** | **12** | **15** |
| Densité à 15°C | | 0,8004 | 0,7992 | 0,7978 | 0,7952 | 0,7942 | 0,7927 |
| Point de décongélation automatique (°C) | ≤ -47 | -51,2 | -50,8 | -50,4 | -49,3 | -48,4 | -47,5 |
| Température de distillation (°C, ASTM D86) | | | | | | | |
| (% de produit distillé) | | | | | | | |
| 5% | | 168,3 | | | 168,5 | | |
| 10% | ≤ 205 | 172,0 | | | 172,7 | | |
| 50% | | 195,5 | | | 197,0 | | |
| 80% | | 223,7 | | | 222,0 | | |
| 95 % | | 246,2 | | | 243,7 | | |
| PF | ≤ 300 | 260,0 | | | 257,0 | | |
| | | | | | | | |
| Résidu (% vol) | ≤ 1,5 | 1,1 | | | 1,1 | | |
| Perte (% vol) | ≤ 1,5 | 0,9 | | | 0,7 | | |

Grâce à la mise en oeuvre de l'invention, le taux d'incorporation maximal de kérosène d'origine biologique, tout en respectant les spécifications Jet A-1, est de 15 % en poids. De plus, le carburéacteur qui est en issu est de meilleure qualité, notamment de par un PCI plus élevé en comparaison à un carburéacteur d'origine pétrolière, et par l'absence de composés oxygénés.

## Revendications

1. Procédé comprenant les étapes consistant à :
- effectuer un hydrotraitement ou un hydrocraquage opéré sous une pression de 20 à 120 bars et à une température comprise entre 250 et 500°C, préférentiellement entre 350 et 400°C, sur une charge hydrocarbonée comprenant ou consistant en :
- une charge d'origine pétrolière,
- une charge d'origine biologique comprenant ou constituée par des huiles végétales et/ou des graisses animales dont au moins 5 % en poids des acides gras ont une longueur de chaîne inférieure ou égale à 14 atomes de carbone par rapport au poids total des triglycérides, préférentiellement au moins 20 % en poids, voire au moins 50 % en poids
- effectuer un fractionnement de manière à récupérer une fraction kérosène, ladite fraction ayant préférentiellement un point d'ébullition inférieur à 300°C, et encore plus préférentiellement un point d'ébullition inférieur à 240°C,
dans lequel la charge d'origine pétrolière est injectée dans une première zone catalytique de l'unité d'hydrotraitement ou d'hydrocraquage et la charge d'origine biologique est injectée dans une deuxième zone catalytique de l'unité d'hydrotraitement ou d'hydrocraquage, située en aval de la première zone catalytique.

2. Procédé selon la revendication 1, **caractérisé en ce que** la charge d'origine biologique comprend au moins une huile végétale choisie parmi l'huile de palmiste, l'huile de coprah (aussi appelée l'huile de coco ou l'huile de noix de coco), l'huile de babassu, huiles issues d'algues, ou un mélange de deux ou plusieurs de ces huiles.

3. Procédé selon la revendication 2, **caractérisé en ce que** la charge d'origine biologique comprend en outre au moins une huile choisie parmi l'huile de palme, l'huile de soja, l'huile de colza, l'huile de tournesol, l'huile de lin, l'huile de son de riz, l'huile de maïs, l'huile d'olive, l'huile de ricin, l'huile de sésame, l'huile de pin et l'huile d'arachide.

4. Procédé selon l'une quelconque des revendications 1 à 3, **caractérisé en ce que** la charge d'origine pétrolière est choisie parmi :
- les coupes gazole provenant de la distillation directe d'un pétrole brut,
- les coupes gazoles issues de différents procédés de conversion tels que le craquage catalytique et la viscoréduction, distillats de distillation sous vide, tel que le VGO (vacuum gas oil),
- les coupes gazoles issus de procédés de conversion, et
- les résidus de la distillation directe d'un pétrole brut, en particulier la distillation atmosphérique.

5. Procédé selon l'une quelconque des revendications 1 à 4, **caractérisé en ce que** la charge hydrocarbonée comprend une teneur en charge d'origine biologique du type huiles végétales et/ou graisses animales inférieure ou égale à 30 % en poids, notamment inférieure ou égale à 20 % en poids et en particulier inférieure ou égale à 10 % en poids par rapport au poids total de la charge hydrocarbonée.

6. Procédé selon l'une quelconque des revendications 1 à 5, **caractérisé en ce que** le fractionnement est effectué par ajout d'une colonne de séparation ou par soutirage latéral.

7. Procédé selon l'une quelconque des revendications 1 à 6, **caractérisé en ce qu'**il comprend un traitement de gaz de recycle, au cours duquel le monoxyde de carbone présent dans ledit gaz de recycle est traité et séparé dudit gaz de recycle avant sa réinjection dans le réacteur d'hydrotraitement ou hydrocraquage.

8. Procédé selon l'une quelconque des revendications 1 à 7, **caractérisé en ce qu'**on effectue une étape d'isomérisation de ladite fraction kérosène.

9. Procédé selon l'une quelconque des revendications 1 à 8, **caractérisé en ce qu'**on utilise ladite fraction kérosène pour la formulation d'un carburéacteur de telle sorte que celui-ci respecte les spécifications du JetA1.

10. Procédé selon l'une quelconque des revendications 1 à 8, **caractérisé en ce que** ladite fraction kérosène est utilisée en tant que charge de procédés pétrochimiques, tels que le vapocraquage.

11. Procédé selon l'une quelconque des revendications 1 à 8, **caractérisé en ce que** ladite fraction kérosène est utilisée pour la formulation de produits de spécialités, tels que solvants, diluants d'encres et de peintures, dégraissants et produits phytosanitaires.

## Patentansprüche

1. Verfahren, umfassend die folgenden Schritte:
- Durchführen einer Hydrobehandlung oder eines Hydrokrackens, ausgeübt bei einem Druck von 20 bis 120 bar und einer Temperatur zwischen 250 und 500 °C, vorzugsweise zwischen 350 und 400 °C, inklusive auf eine Kohlenwasserstoffbeschickung, umfassend oder bestehend aus:
- einer Beschickung mit Erdölursprung,
- einer Beschickung biologischen Ursprungs, umfassend oder gebildet von pflanzlichen Ölen und/oder tierischen Fetten, von denen mindestens 5 Gew.-% der Fettsäuren eine Kettenlänge von unter oder gleich 14 Kohlenstoffatomen in Bezug zum Gesamtgewicht der Triglyceride, vorzugsweise mindestens 20 Gew.-%, sogar mindestens 50 Gew.-%, haben,
- Durchführen einer Fraktionierung derart, dass eine Kerosinfraktion zurückgewonnen wird, wobei die Fraktion vorzugsweise einen Siedepunkt unter 300 °C, und noch vorzugsweiser einen Siedepunkt unter 240 °C hat,
wobei die Beschickung mit Erdölursprung in eine erste katalytische Zone der Hydrobehandlungs- oder Hydrokrackeinheit eingeleitet wird und die Beschickung biologischen Ursprungs in eine zweite katalytische Zone der Hydrobehandlungs- oder Hydrokrackeinheit eingeleitet wird, die sich nach der ersten katalytischen Zone befindet.

2. Verfahren nach Anspruch 1, **dadurch gekennzeichnet, dass** die Beschickung biologischen Ursprungs mindestens ein pflanzliches Öl umfasst, das aus dem Palmkernöl, dem Kopraöl (auch als Kokosöl oder Kokosnussöl bezeichnet), dem Babassuöl, dem Algenöl oder einem Gemisch aus zwei oder mehreren dieser Öle ausgewählt ist.

3. Verfahren nach Anspruch 2, **dadurch gekennzeichnet, dass** die Beschickung biologischen Ursprungs ferner mindestens ein Öl umfasst, das aus dem Palmöl, dem Sojaöl, dem Rapsöl, dem Sonnenblumenöl, dem Leinöl, dem Reiskleieöl, dem Maisöl, dem Olivenöl, dem Rizinusöl, dem Sesamöl, dem Tallöl und dem Erdnussöl ausgewählt ist.

4. Verfahren nach einem der Ansprüche 1 bis 3, **dadurch gekennzeichnet, dass** die Beschickung mit Erdölursprung ausgewählt ist aus:
- den Kraftstoff-Zuschnitten aus der direkten Destillation eines Rohöls,
- den Kraftstoff-Zuschnitten aus verschiedenen Umwandlungsverfahren wie katalytisches Kracken und Visbreaking, Vakuumdestillationsdestillaten wie VGO (Vacuum Gas Oil),
- den Kraftstoff-Zuschnitten aus Umwandlungsverfahren und
- den Rückständen der Direktdestillation eines Rohöls, insbesondere der atmosphärischen Destillation

5. Verfahren nach einem der Ansprüche 1 bis 4, **dadurch gekennzeichnet, dass** die Kohlenwasserstoffbeschickung einen Gehalt an Beschickung biologischen Ursprungs vom Typ pflanzliche Öle und/oder tierische Fette von unter oder gleich 30 Gew.-%, vor allem von unter oder gleich 20 Gew.-% und insbesondere von unter oder gleich 10 Gew.-% in Bezug zum Gesamtgewicht der Kohlenwasserstoffbeschickung umfasst.

6. Verfahren nach einem der Ansprüche 1 bis 5, **dadurch gekennzeichnet, dass** die Fraktionierung durch Hinzufügen einer Splittkolonne oder durch Seitenentnahme durchgeführt wird.

7. Verfahren nach einem der Ansprüche 1 bis 7, **dadurch gekennzeichnet, dass** es eine Recyclinggasbehandlung umfasst, bei dem das in dem Recyclinggas vorhandene Kohlenmonoxid vor seiner Wiedereinleitung in den Hydrobehandlungs- oder Hydrokrackreaktor behandelt und vom Recyclinggas getrennt wird.

8. Verfahren nach einem der Ansprüche 1 bis 7, **dadurch gekennzeichnet, dass** ein Schritt der Isomerisierung der Kerosinfraktion durchgeführt wird.

9. Verfahren nach einem der Ansprüche 1 bis 8, **dadurch gekennzeichnet, dass** die Kerosinfraktion zur Formulierung eines Düsenkraftstoffs verwendet wird, der derart ist, dass er die JetA1-Spezifikationen erfüllt.

10. Verfahren nach einem der Ansprüche 1 bis 8, **dadurch gekennzeichnet, dass** die Kerosinfraktion als Beschickung petrolchemischer Verfahren wie das Dampfkracken verwendet wird.

11. Verfahren nach einem der Ansprüche 1 bis 8, **dadurch gekennzeichnet, dass** die Kerosinfraktion für die Formulierung von Spezialprodukten wie Lösungsmittel, Verdünner, Druckfarben und Lacke, Entfetter und Pflanzenschutzmittel verwendet wird.

## Claims

1. A process comprising the steps consisting in:
- performing a hydrotreatment or a hydrocracking operated at a pressure of 20 to 120 bar and at a temperature between 250 and 500°C, preferably between 350 and 400°C, on a hydrocarbon feedstock comprising or consisting of:
- a petroleum-derived feedstock,
- a biologically-derived feedstock comprising or formed by vegetable oils and/or animal fats, at least 5% by weight, preferably at least 20% by weight or even at least 50% by weight of the fatty acids of which have a chain length less than or equal to 14 carbon atoms relative to the total weight of the triglycerides; and
- performing a fractionation so as to recover a kerosene fraction, said fraction preferably having a boiling point below 300°C and even more preferably a boiling point below 240°C,
in which the petroleum-derived feedstock is injected into a first catalytic zone of the hydrotreatment or hydrocracking unit and the biologically-derived feedstock is injected into a second catalytic zone of the hydrotreatment or hydrocracking unit, this zone being located downstream of the first catalytic zone..

2. The process as claimed in claim 1, **characterized in that** the biologically-derived feedstock comprising at least one vegetable oil chosen from palm nut oil, copra oil (also called coco oil or coconut oil), babassu oil, seaweed oils or a blend of two or more of these oils.

3. The process as claimed in claim 2, **characterized in that** the biologically-derived feedstock furthermore comprises at least one oil chosen from palm nut oil, soybean oil, rapeseed oil, sunflower oil, linseed oil, rice bran oil, corn oil, olive oil, castor oil, sesame oil, pine oil and groundnut oil.

4. The process as claimed in any one of claims 1 to 3, **characterized in that** the petroleum-derived feedstock is chosen from:
- gas oil cuts from the straight-run distillation of a crude oil;
- gas oil cuts coming from various conversion processes such as catalytic cracking and visbreaking, vacuum distillation distillates, such as VGO (vacuum gas oil);
- gas oil cuts coming from conversion processes; and
- residues from the straight-run distillation of a crude oil, in particular atmospheric distillation.

5. The process as claimed in any one of claims 1 to 4, **characterized in that** the hydrocarbon feedstock comprises a content of biologically-derived feedstock of the vegetable oil and/or animal fat type of less than or equal to 30% by weight, especially less than or equal to 20% by weight and in particular less than or equal to 10% by weight relative to the total weight of the hydrocarbon feedstock.

6. The process as claimed in any one of claims 1 to 5, **characterized in that** the fractionation is carried out by adding a separation column or by sidestream withdrawal.

7. The process as claimed in any one of claims 1 to 6, **characterized in that** it comprises a recycle gas treatment during which the carbon monoxide present in said recycle gas is treated and separated from said recycle gas before it is reinjected into the hydrotreatment or hydrocracking reactor.

8. The process as claimed in any one of claims 1 to 7, **characterized in that** a step of isomerizing said kerosene fraction is carried out.

9. The process as claimed in any one of claims 1 to 8, **characterized in that** said kerosene fraction is used for formulating a jet fuel in such a way that it meets the Jet A-1 specification.

10. The process as claimed in any one of claims 1 to 8, **characterized in that** said kerosene fraction is used as feedstock for petrochemical processes, such as steam cracking.

11. The process as claimed in any one of claims 1 to 8, **characterized in that** said kerosene fraction is used for formulating specialty products, such as solvents, diluents for inks and paints, degreasing agents and phytosanitary products.
